# EUROPEAN PATENT APPLICATION

(11) **EP 4 814 714 A2**
(43) Date of publication of application: **30.09.2026**
(21) Application number: 26190037.7
(22) Date of filing: 13.10.2020
(51) Int. Cl.: G06F 9/455

(54) **INFORMATION PROCESSING DEVICE, MANAGEMENT METHOD, AND MANAGEMENT PROGRAM**

(30) Priority: 29.11.2019 JP 2019216983
(62) Document number(s) of the earlier application(s) in accordance with Art. 76 EPC: 24159943.0 / 4 354 288; 20201466.8 / 3 828 699
(71) Applicant: OMRON Corporation, Kyoto-shi, Kyoto 600-8530 (JP)
(72) Inventor: YOSHIKAWA, Tetsuo, Kyoto, 619-0283 (JP)
(74) Representative: HKW Intellectual Property PartG mbB

(57) **Abstract**

Provided is a technique for appropriately performing shutdown of a virtualization system. An information processing device (1a) includes a control unit (10a) configured to manage shutdown of a plurality of virtual machines (14) that operate on a hypervisor (11); the information processing device (1a) being connected to one or more uninterruptible power supply devices (2).The control unit (10a) is configured to execute a test mode, in which a shutdown time of all of the virtual machines (14) included in the plurality of virtual machines (14) is estimated.

## Description

### FIELD

The present invention relates to an information processing device, a management method and a management program.

### BACKGROUND

A virtualization system is known as a known technique. For example, JP 2017-187992A discloses that a virtual environment can be realized in which a plurality of OSs are executable independently to each other using a shared hardware resource, in a control device including at least one processor.

JP 2017-187992A, JP 5664004B, JP 6029165B, and JP 5206750B are examples of background art.

However, when the virtualization system is shut down, next processing (such as shutdown of another guest OS) is performed following a set time schedule, without confirming whether or not a guest OS has been shut down (see JP 5664004B and JP 6029165B, for example).

Therefore, in the verification at the time of system construction, there is a problem in that it is not possible to confirm whether or not a guest OS has been shut down, and the next processing cannot be performed until a set time has elapsed, and therefore time is wasted in the verification. Also, there is a problem in that if it took a longer time to shut down a guest OS than estimated, the guest OS is not properly shut down.

Also, the shutdown of a guest OS is regarded as completed when a set time has elapsed, and the coupling between a virtual OS (hypervisor), a virtual storage, and the like is released.

Note that, in JP 5206750B, a configuration in which a power supply device supplies power to a virtual host computer via a tap is disclosed.

### SUMMARY

One aspect of the present invention aims to provide a technique for appropriately performing the shutdown of a virtualization system.

In order to solve the above problem, an information processing device according to one aspect of the invention has the features of claim 1.

According to this configuration, the virtualization system can be appropriately shut down.

According to a further aspect of the present invention, a management method is provided that has the features of claim 11.

According to a further aspect of the present invention, a computer program is provided that has the features of claim 13.

The information processing device according to aspects of the present invention may be realized using a computer, and in this case, a control program for an information processing device that realizes the information processing device on a computer by causing the computer to operate as the units (software elements) included in the information processing device, and a computer-readable storage medium storing the control program also fall within the scope of the present invention.

According to aspects of the invention, the shutdown of a virtualization system can be appropriately performed.

### BRIEF DESCRIPTION OF THE DRAWINGS

FIG. 1 is a diagram illustrating a configuration of an information processing system according to Embodiment 1.
FIG. 2 is a diagram illustrating an outline of a virtual software according to Embodiment 1.
FIG. 3 is a diagram illustrating a detailed configuration of the virtual software and a configuration of a periphery according to Embodiment 1.
FIG. 4 is a block diagram illustrating a configuration of a UPS according to Embodiment 1.
FIG. 5 is a block diagram illustrating a configuration of a network card according to Embodiment 1.
FIG. 6 is a flowchart illustrating processing of a server according to Embodiment 1.
FIG. 7 is a flowchart illustrating processing of a network card according to Embodiment 1.
FIG. 8 is a diagram illustrating a display screen of a node list according to Embodiment 2.
FIG. 9 is a diagram illustrating a screen for displaying a shutdown time and the like of each virtual machine in a stoppage test according to Embodiment 2.
FIG. 10 is a diagram illustrating a screen for setting a timeout time of each node according to Embodiment 2.
FIG. 11 is a diagram illustrating a screen for executing a startup test according to Embodiment 2.
FIG. 12 is a diagram illustrating a screen for setting a startup priority according to Embodiment 2.
FIG. 13 is a diagram illustrating a setting screen regarding a UPS according to Embodiment 2.
FIG. 14 is a diagram illustrating a setting screen regarding a management software according to Embodiment 2.
FIG. 15 is a diagram illustrating a script management screen according to Embodiment 2.
FIG. 16 is a diagram illustrating a basic setting screen according to Embodiment 2.

### DETAILED DESCRIPTION

### Embodiment 1

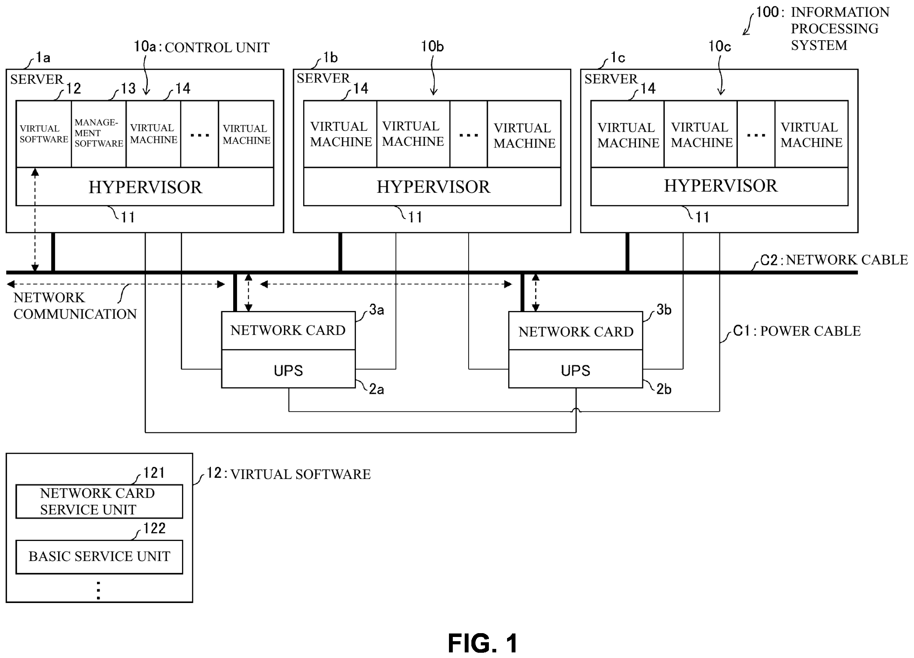

Hereinafter, embodiments according (hereinafter, also denoted as the "present embodiment") will be described based on FIGS. 1 to 7. Note that the same or corresponding portions are assigned the same reference numerals in the drawings, and descriptions thereof will be omitted. The present embodiment will be described taking an information processing system 100 as a representative example of the virtualization system, for example. In order to facilitate the understanding of a server 1 according to one aspect of the present invention, first, an outline of the information processing system 100 will be described using FIG. 1.

### 1. Application example

### Configuration of information processing system 100

FIG. 1 is a diagram illustrating a configuration of the information processing system 100 according to the present embodiment, which is a reference embodiment that does not include all features recited in claim 1. As shown in FIG. 1, the information processing system 100 is a virtualization system that includes the servers 1, UPSs (Uninterruptible Power Supply) 2, and network cards 3.

The servers 1 are information processing devices, and three servers 1a, 1b, and 1c are shown in FIG. 1, but the number of servers is not specifically limited. The UPSs 2 are uninterruptible power supply devices, and two UPSs 2a and 2b are shown in FIG. 1, but the number of UPSs is not specifically limited. The network cards 3 are control devices for controlling the servers 1 and the UPSs 2, and two network cards 3a and 3b are shown in FIG. 1, but the number of network cards is not specifically limited.

The servers 1a, 1b, and 1c are connected to the UPSs 2a and 2b through power cables C1, and are supplied with power therefrom. The servers 1a, 1b, and 1c are connected through a network cable C2 so as to be able to communicate to each other. Also, the servers 1a, 1b, and 1c are connected to the network cards 3a and 3b through the network cable C2 so as to be able to perform communication. The network card 3a is inserted into a slot in a back side of the UPS 2a. The network card 3b is inserted into a slot in a back side of the UPS 2b.

### 2. Exemplary configuration

### Configuration of server 1

As shown in FIG. 1, the server 1a includes a control unit 10a, and includes a hypervisor 11, virtual software 12, management software 13, and virtual machines 14, as the software to be executed by the control unit 10a. The servers 1b and 1c respectively include control units 10b and 10c, and each include a hypervisor 11 and virtual machines 14 that are software programs to be executed by the control units 10b and 10c. Note that the control unit 10a of the server 1a may also be configured to not include the virtual machines 14.

The hypervisor 11 is a virtual OS that integrally manages other pieces of software in each server, and may be AHV of Nutanix (registered trademark), ESXi of VMware (registered trademark), or the like. The virtual software 12 is software for controlling shutdown of the servers 1. The management software 13 is software for monitoring the states of virtual machines 14 by communicating with the virtual machines 14 of each server, and may be Prism of Nutanix, vCSA of VMware, or the like. The virtual machine 14 is a guest OS, and may be Linux (registered trademark), Windows (registered trademark), or the like.

The virtual software 12, the management software 13, and the virtual machines 14 operate under the management of the hypervisor 11. The virtual software 12 acquires the state of a virtual machine 14 using an API (Application Programming Interface) of the management software 13, and gives an instruction to shut down the virtual machine 14.

### Configuration of virtual software 12

As shown in FIG. 1, the control unit 10a includes, as the virtual software 12, a basic service unit (first management unit) 122 that manages shutdown of a plurality of virtual machines 14 that operates on the hypervisor 11, and a network card service unit (second management unit) 121 that shuts down the server 1a when all of the plurality of virtual machines 14 are shut down by the basic service unit 122. The basic service unit 122, upon acquiring information indicating that the shutdown of the plurality of virtual machines 14 is completed, executes shutdown of a virtual machine 14 other than that one virtual machine 14.

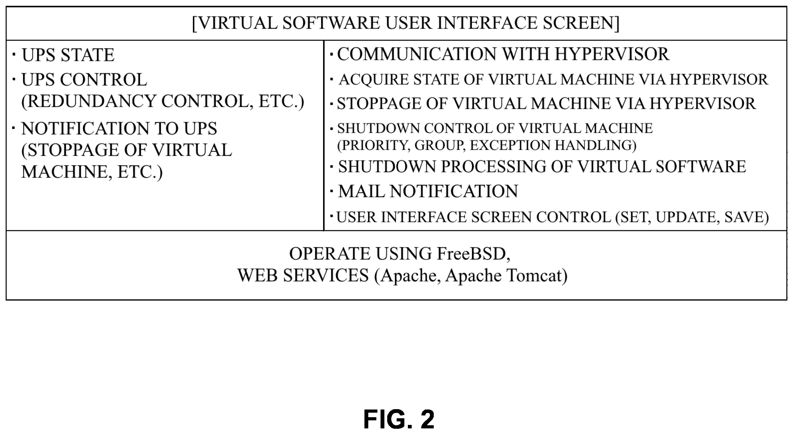

FIG. 2 is a diagram illustrating an outline of the virtual software 12 according to the present embodiment. The virtual software 12 generates a user interface screen, and displays the user interface screen on a display. Items as shown in FIG. 2 are displayed on the user interface screen, and a user can refer to the states at this point in time. That is, on the user interface screen, items relating to the states of the UPSs 2, control of the UPSs 2 (such as redundancy control), notifications to the UPSs 2 (such as stoppage of a virtual machine), communication with the hypervisors 11, the states of the virtual machines 14 via the hypervisors 11, stoppages of the virtual machines 14 via the hypervisors 11, shutdown control (priority, group, exception handling) of the virtual machine 14, shutdown processing of the virtual software 12, mail notifications, and user interface screen control (setting, updating, saving), are displayed, for example.

Note that the virtual software 12 operates using Free BSD, Web services (Apache, Apache Tomcat), or the like.

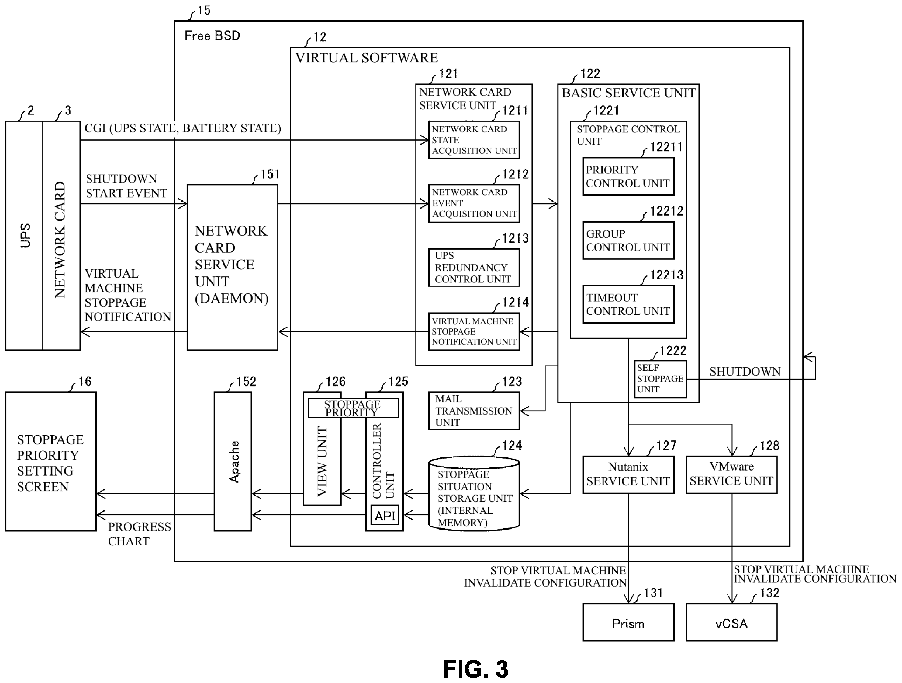

FIG. 3 is a diagram illustrating a detailed configuration of the virtual software 12 and a configuration of a periphery according to the present embodiment. As shown in FIG. 3, the virtual software 12, a network card service unit (daemon) 151, and Apache 152 operate on Free BSD 15.

The virtual software 12 includes the network card service unit 121, the basic service unit 122, a mail transmission unit 123, a stoppage situation storage unit 124, a controller unit 125, a view unit 126, a Nutanix service unit 127, and a VMware service unit 128.

The network card service unit 121 communicates with a network card 3. The network card service unit 121 includes a network card state acquisition unit 1211, a network card event acquisition unit 1212, a UPS redundancy control unit 1213, and a virtual machine stoppage notification unit 1214.

The network card state acquisition unit 1211 acquires the state of a UPS 2 and the battery condition from the network card 3 via a CGI (Common Gateway Interface). The network card event acquisition unit 1212 acquires a shutdown start event from the network card 3 via the network card service unit (daemon) 151. The UPS redundancy control unit 1213 controls the redundancy of the UPS 2 to which the server 1 is connected. The virtual machine stoppage notification unit 1214 accepts a notification (virtual machine stop notification) indicating that a virtual machine 14 has stopped from the basic service unit 122. Also, the virtual machine stoppage notification unit 1214 transmits a virtual machine stoppage notification to the network card 3 via the network card service unit (daemon) 151.

The basic service unit 122 includes a stoppage control unit 1221 and a self stoppage unit 1222. The stoppage control unit 1221 includes a priority control unit 12211, a group control unit 12212, and a timeout control unit 12213. The stoppage control unit 1221 instructs Prism 131, which is one program of the management software 13, to stop a virtual machine 14 and invalidate the virtualization configuration via the Nutanix service unit 127. Also, the stoppage control unit 1221 instructs vCSA 132, which is one program of the management software 13, to stop a virtual machine 14 and invalidate the virtualization configuration via the VMware service unit 128.

The self stoppage unit 1222 shuts down the Free BSD 15.

The mail transmission unit 123 acquires the stoppage situations of the virtual machines 14 from the basic service unit 122 and transmits a mail including the stoppage situations of the virtual machines 14 to the user, as needed. The stoppage situation storage unit 124 acquires the stoppage situations of the virtual machines 14 from the basic service unit 122 and stores the stoppage situations. The controller unit 125 acquires the stoppage situations of the virtual machines 14 from the stoppage situation storage unit 124, and displays a progress chart in a stoppage priority setting screen 16 through the view unit 126 and the Apache 152, or through the Apache 152.

### Virtual software 12 and management software 13

The management software (third management unit) 13 of the control unit 10a monitors the statuses of the plurality of virtual machines 14, and controls the plurality of virtual machines 14. The basic service unit 122 of the virtual software 12 acquires the status information of each of the plurality of virtual machines 14 via the management software 13, and executes shutdown of the plurality of virtual machines 14 via the management software 13.

Also, the network card service unit 121 of the virtual software 12 shuts down the servers 1 via the network cards 3 that controls the servers 1 and the UPSs 2 that are connected to the servers 1, when all of the plurality of virtual machines 14 are shut down by the basic service unit 122.

### Configuration of UPS 2

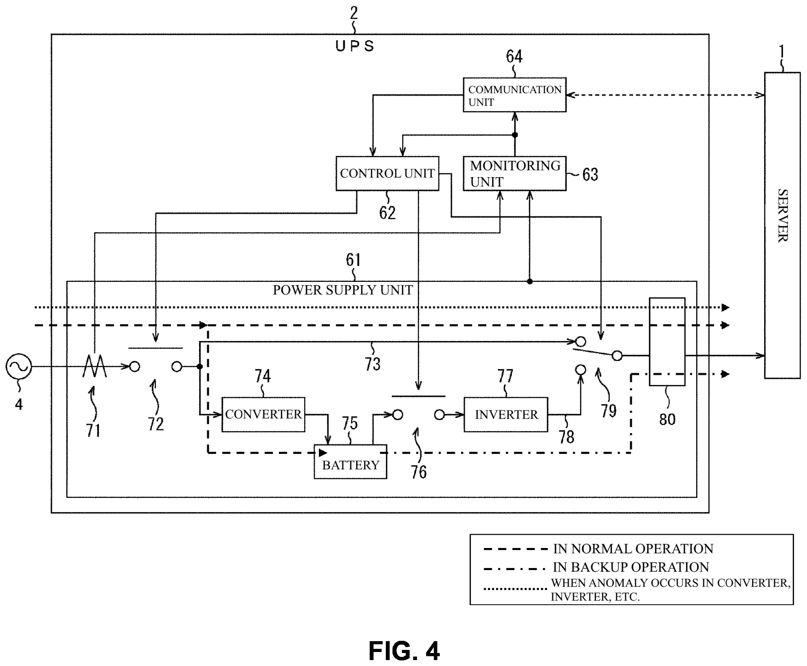

FIG. 4 is a block diagram illustrating a configuration of the UPS 2 according to the present embodiment. As shown in FIG. 4, the UPS 2 includes a power supply unit 61, a control unit 62, a monitoring unit 63, and a communication unit 64.

When the power from the commercial power supply 4 is normal, the power supply unit 61 receives power supplied from the commercial power supply 4 and supplies the power to the servers 1. Also, when the power from the commercial power supply 4 is anomalous, or power is not supplied, the power supply unit 61 supplies power to the servers 1 from the internal battery 75. The power supply unit 61 switches the power supply (commercial power supply 4 or battery 75), which serves as a power feeding source to the servers 1, in response to the instruction from the control unit 62.

The control unit 62 controls the opening/closing of an input relay 72 and an output relay 76, and switching of an output switch 79, of the power supply unit 61, in response to the instructions from the monitoring unit 63 and the communication unit 64. The monitoring unit 63 monitors the situation of a noise filter 71 of the power supply unit 61, and transmits a monitoring result indicating whether or not the power from the commercial power supply 4 is normal to the control unit 62 and the communication unit 64. The communication unit 64 transmits the monitoring result from the monitoring unit 63 to the servers 1. Also, the communication unit 64 makes an instruction regarding the switching of the power supply to the control unit 62 in response to an instruction from the servers 1.

### Configuration of power supply unit 61

As shown in FIG. 4, the power supply unit 61 includes the noise filter 71, the input relay 72, a power line 73, a converter 74, the battery 75, the output relay 76, an inverter 77, a power line 78, the output switch 79, and a noise filter 80.

In a normal operation, the input relay 72 is closed, the output relay 76 is open, and the output switch 79 is switched to the power line 73 side, by the control of the control unit 62. In this case, the power from the commercial power supply 4 is supplied to the servers 1 via the noise filter 71, the input relay 72, the power line 73, the output switch 79, and the noise filter 80. Also, the battery 75 is charged by the power from the commercial power supply 4 via the noise filter 71, the input relay 72, and the converter 74.

In a backup operation, the input relay 72 is open, the output relay 76 is closed, and the output switch 79 is switched to the power line 78 side, by the control of the control unit 62. In this case, the power from the battery 75 is supplied to the servers 1 via the output relay 76, the inverter 77, the power line 78, the output switch 79, and the noise filter 80. Note that the power from the commercial power supply 4 is not supplied to the servers 1.

When an anomaly occurs in the converter 74, the inverter 77, or the like of the power supply unit 61, the input relay 72 is closed, the output relay 76 is opened, and the output switch 79 is switched to the power line 73 side, by the control of the control unit 62. In this case, the power from the commercial power supply 4 is supplied to the servers 1 via the noise filter 71, the input relay 72, the power line 73, the output switch 79, and the noise filter 80. Note that the battery 75 is not charged by the power from the commercial power supply 4.

### Configuration of network card 3

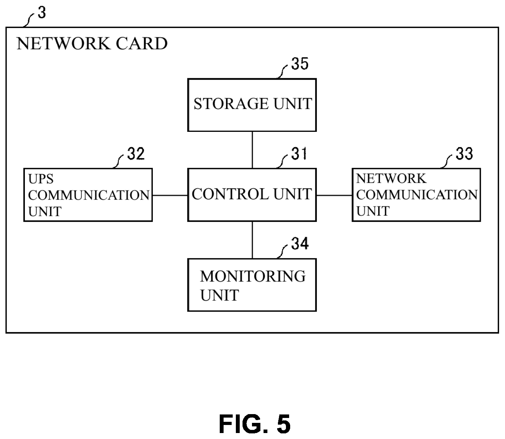

FIG. 5 is a block diagram illustrating a configuration of the network card 3 according to the present embodiment. As shown in FIG. 5, the network card 3 includes a control unit 31, a UPS communication unit 32, a network communication unit 33, a monitoring unit 34, and a storage unit 35. The control unit 31 controls the operations of the entire network card 3. The UPS communication unit 32 communicates with a UPS 2 via the slot of the UPS 2. The network communication unit 33 communicates with the servers 1 through the network cable C2, and is a network USB, for example. The monitoring unit 34 performs time monitoring when shutdown processing is performed. The storage unit 35 stores and reads out data in response to the instruction from the control unit 31, and is an HDD, an SSD, or the like.

### Processing of server 1

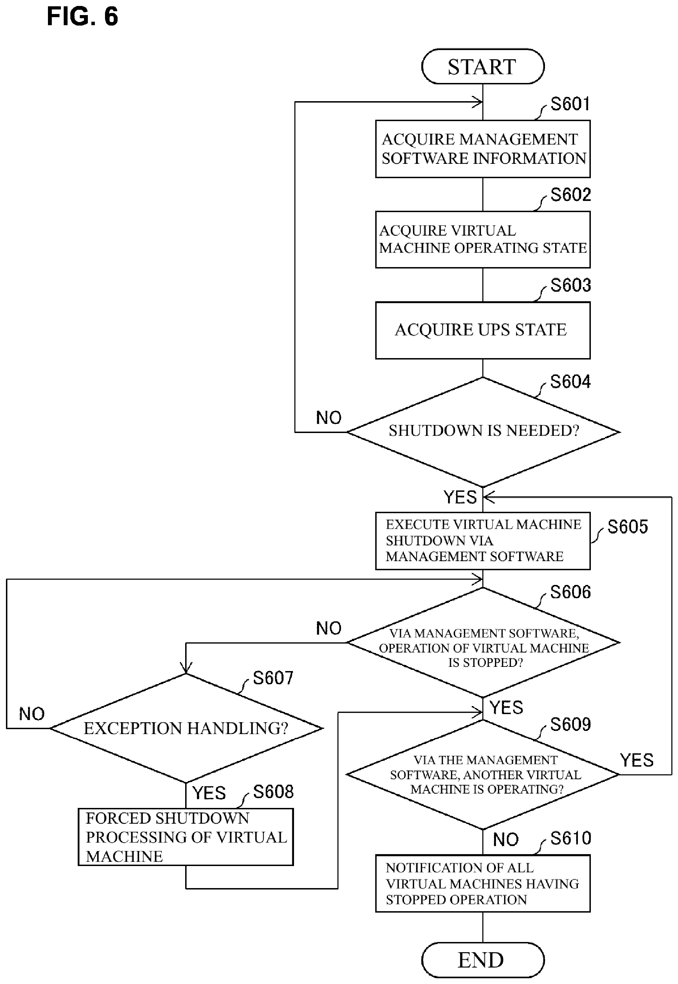

FIG. 6 is a flowchart illustrating processing of the server 1 according to the present embodiment. FIG. 6 shows the processing of the virtual software 12 of the control unit 10a of the server 1a. In the following, the processing of the virtual software 12 will be described following FIG. 6.

### Step S601

In the server 1a, the virtual software 12 acquires information regarding the management software 13 (e.g., information regarding the API).

### Step S602

The virtual software 12 acquires the operating states of the virtual machines 14 (operating or not) from the API of the management software 13. In this case, the management software 13 acquires the operating states of the virtual machines 14 in the server 1a, and acquires the operating states of the virtual machines 14 in the servers 1b and 1c via the network cable C2. Also, the management software 13 passes the acquired operating states of the virtual machines 14 to the virtual software 12.

### Step S603

The virtual software 12 acquires the states of the UPSs 2a and 2b through the API of the management software 13. In this case, the management software 13 instructs the network cards 3a and 3b to respectively report the states of the UPSs 2a and 2b via the network cable C2. Also, the management software 13 passes the acquired states of the UPSs 2a and 2b to the virtual software 12.

### Step S604

The virtual software 12 determines whether or not shutdown is needed by referring to the operating states of the virtual machines 14 acquired in step S602, and the states of the UPSs 2a and 2b acquired in step S603. For example, it is determined that the shutdown is needed if an operating virtual machine 14 is present and both of the UPSs 2a and 2b are performing the backup operation.

If the shutdown is needed (YES in step S604), the virtual software 12 executes the processing in step S605. If the shutdown is not needed (NO in step S604), the virtual software 12 again executes the processing in step S601.

### Step S605: First management step

The virtual software 12 executes shutdown of one virtual machine 14 that is operating via the management software 13 (that is, using the API of the management software 13).

### Step S606

The virtual software 12 confirms whether or not the operation of the virtual machine 14 regarding which shutdown was executed has stopped via the management software 13. If the operation of the virtual machine 14 has stopped (YES in step S606), the virtual software 12 executes the determination in step S609. If the operation of the virtual machine 14 has not stopped (NO in step S606), the virtual software 12 executes the determination in step S607.

### Step S607

The virtual software 12 determines whether or not exception handling (e.g., time-out monitoring processing) is to be performed. If exception handling is to be performed (YES in step S607), the virtual software 12 executes the determination in step S608. If exception handling is not to be performed (NO in step S607), the virtual software 12 again executes the determination in step S606.

### Step S608

The virtual software 12 executes forced shutdown processing of the virtual machine 14 via the management software 13. Also, the virtual software 12 executes the determination in step S609.

### Step S609

The virtual software 12 determines whether or not another virtual machine 14 is operating via the management software 13. If another virtual machine 14 is operating (YES in step S609), the virtual software 12 again executes the processing in step S605. If no other virtual machine 14 is operating (NO in step S609), the virtual software 12 executes the processing in step S610.

### Step S610: Second management step

The virtual software 12 notifies the network cards 3a and 3b of the fact that all of the virtual machines have stopped operation via the management software 13. With this, the shutdown of the servers 1 is performed.

### Processing of network card 3

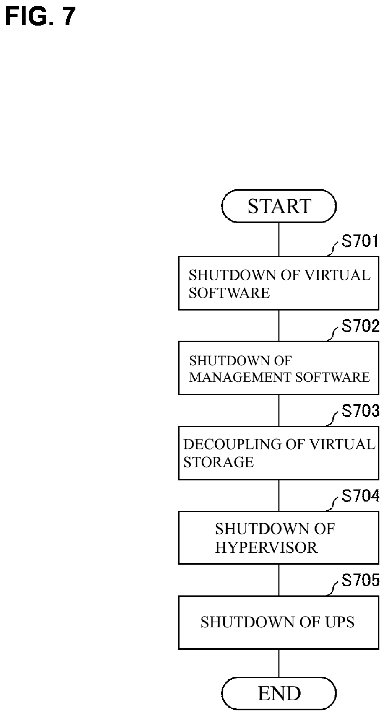

FIG. 7 is a flowchart illustrating processing of the network card 3 according to the present embodiment. In the following, the processing of the network card 3 will be described following FIG. 7. This processing is executed by the control unit 31 when the network communication unit 33 of the network card 3 has received a notification saying that all of the virtual machines have stopped operation from the virtual software 12.

### Step S701

The control unit 31 of the network card 3 executes the shutdown of the virtual software 12 via the network communication unit 33 and the network cable C2.

### Step S702

The control unit 31 executes the shutdown of the management software 13 via the network communication unit 33 and the network cable C2.

### Step S703

The control unit 31 decouples a virtual storage via the network communication unit 33 and the network cable C2. The virtual storage is a virtual storage device that is constituted by (logically coupling) a plurality of physical storage devices (such as an HDD (Hard Disk Drive) and an SSD (Solid State Drive)) in at least one server 1. As a result of releasing the coupling of the virtual storage, each physical storage device can be powered off.

Note that the physical storage device that constitutes the virtual storage need not be incorporated in or connected to the servers 1, and may be a NAS (Network Attached Storage) that is directly connected to the network cable C2 and is shared by the plurality of servers 1 through the network cable C2, or may also be constituted by a storage device controlled by a server 1 and a NAS.

### Step S704

The control unit 31 executes shutdown of the hypervisor 11 via the network communication unit 33 and the network cable C2.

### Step S705

The control unit 31 executes shutdown of the UPS 2 via the UPS communication unit 32.

### Effects of Embodiment 1

According to the present embodiment, as a result of adopting a method in which, instead of performing next processing at the set time, the next processing is performed after grasping the shutdown states of the virtual machines 14, the shutdown of the information processing system 100, which is a virtualization system, can be appropriately performed. Also, if the next processing cannot be executed due to some factor, the next processing is performed after forcibly performing shutdown by timeout processing, and as a result, the information processing system 100 can be shut down. Moreover, as a result of notifying the network card 3 of the fact that all of the virtual machines 14 are shut down, immediate scripts for shutting down the hypervisor 11, which is a virtual OS, decoupling the virtual storage, and the like can be executed.

### Embodiment 2

Embodiment 2 will be described in the following. Note that, for the convenience of description, structural elements having the same functions as structural elements described in Embodiment 1 are given the same reference signs, and the description thereof will be omitted.

In the present embodiment, the screen that is managed by the virtual software 12 and is to be displayed in a display of the server 1 or a remote terminal (not illustrated) will be described.

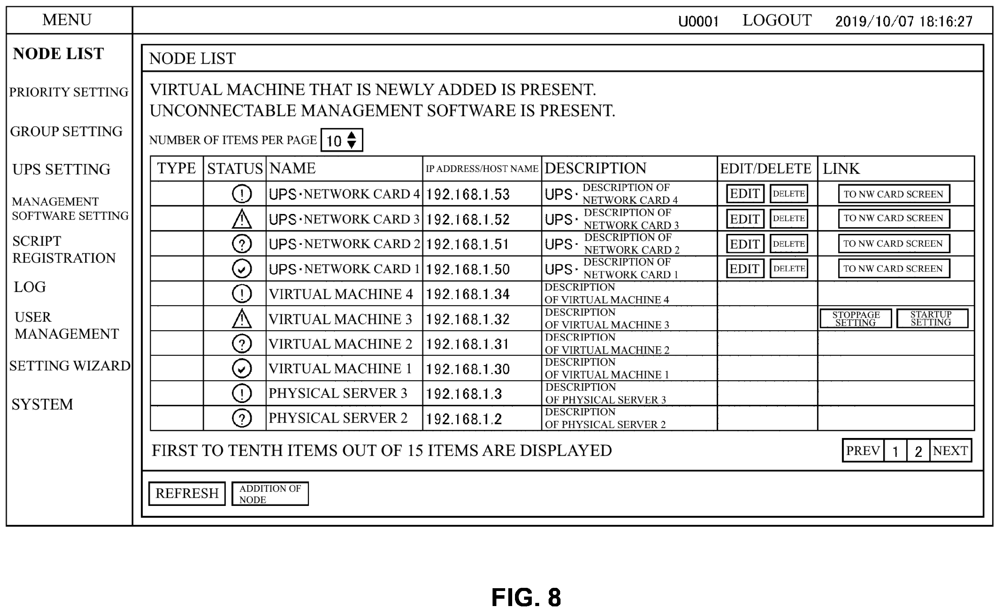

FIG. 8 is a diagram illustrating a display screen of a node list according to the present embodiment. As shown in FIG. 8, the node list shows the states of the servers 1, the UPSs 2, the network cards 3, the virtual machines 14, and the like.

The server 1 may have a test mode in which the plurality of virtual machines (guest OSs) 14 are shut down following a predetermined order. In this case, upon receiving an instruction to start the test mode that is given by a user operation, the control unit 10 of the server 1 executes the test mode.

In the test mode, the control unit 10 executes stoppage priority acquisition processing for acquiring the stoppage priority indicating the order of stopping the nodes, node stopping processing for sequentially stopping the nodes following the acquired stoppage priority, and shutdown time display processing for displaying, for each node, the period from when stopping was instructed until when stopping completion is reported, as the shutdown time.

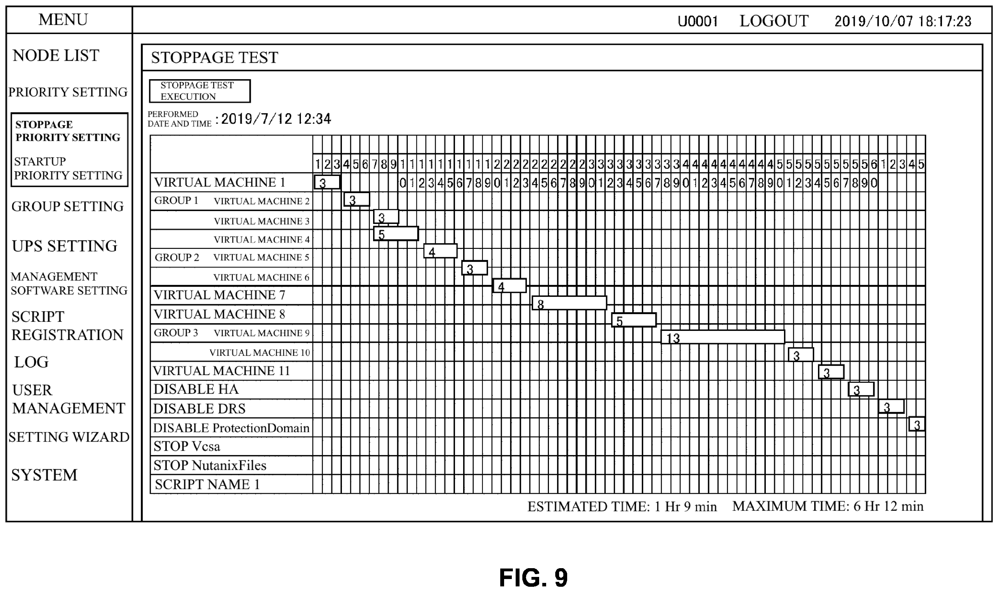

FIG. 9 is a diagram illustrating a screen for displaying the shutdown time and the like of each virtual machine 14 in a stoppage test according to the present embodiment.

The server 1 may further include a controller unit (display control unit) 125 that generates screen data for displaying the shutdown time of each virtual machine 14 in the test mode.

As shown in FIG. 9, the screen data may further include an estimated time (accumulated time) of the shutdown time of each virtual machine 14, an item indicating whether or not the shutdown of each virtual machine 14 is successful, and a maximum time (time limit of the accumulated time).

The estimated time is a sum of the shutdown times estimated from the period from when stopping was instructed to each virtual machine 14 until when stopping completion of the virtual machine 14 is reported, which is obtained as a result of the server 1 executing the test mode. The maximum time is the period for which the battery 75 can supply power in the backup operation. If the estimated time is the maximum time or less, it can be said that there is no problem because the shutdown of all of the virtual machines 14 can be ended in a period for which the battery 75 can supply power.

When the shutdown of a virtual machine 14 is normally ended, the display control unit generates screen data including a black band corresponding to the virtual machine 14, for example. If the shutdown of a virtual machine 14 is abnormally ended, the display control unit generates the screen data including a red band corresponding to the virtual machine 14, for example.

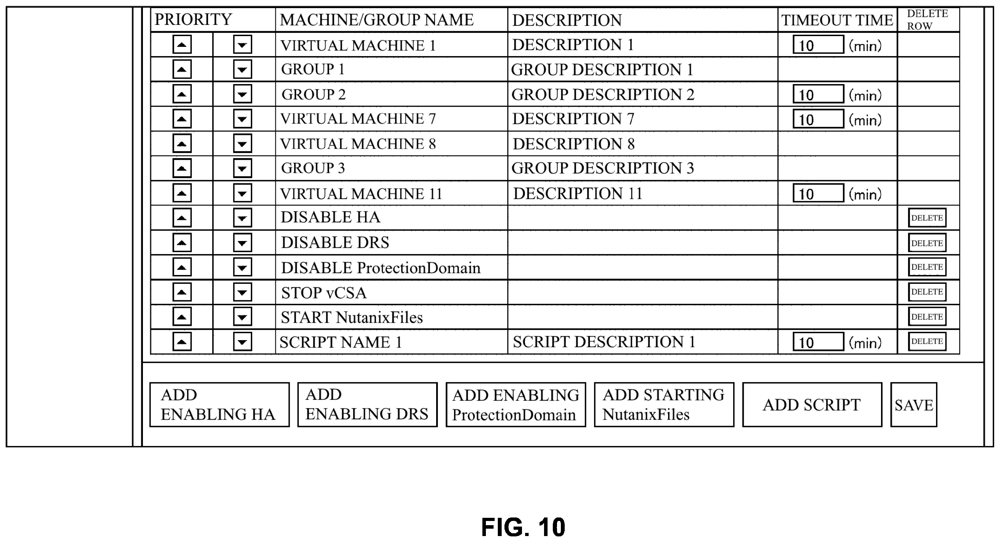

FIG. 10 is a diagram illustrating a screen for setting a timeout time of each node according to the present embodiment. As shown in FIG. 10, in the setting screen of the timeout time, necessary nodes can be added and the timeout time can be set.

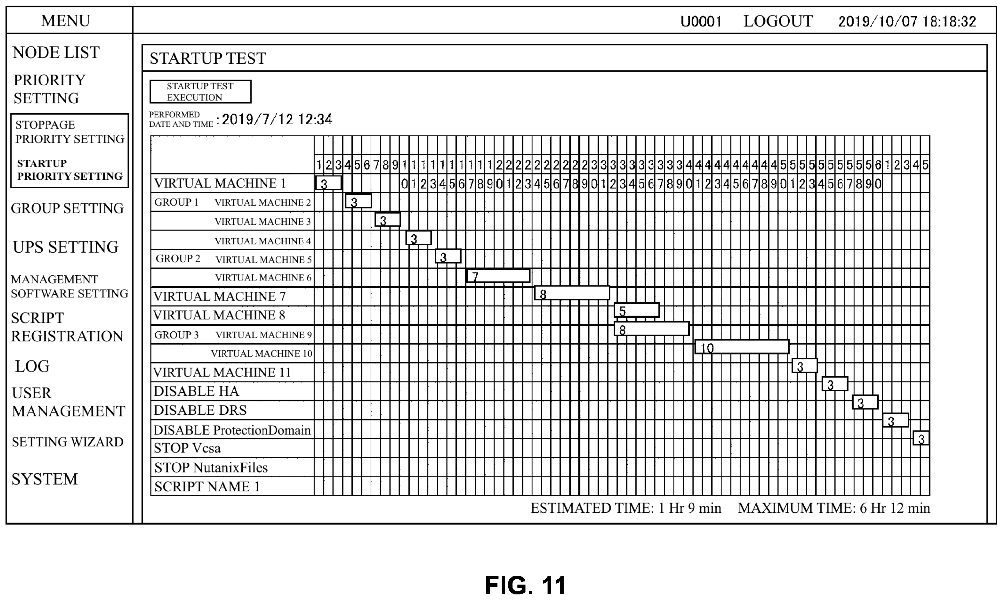

FIG. 11 is a diagram illustrating a screen for executing a startup test according to the present embodiment. As shown in FIG. 11, the execution screen of the startup test shows the startup order of the nodes, and the startup time of each node. The configuration may also be such that the server 1 performs the startup test of the plurality of virtual machines (guest OSs) 14 following a predetermined order. In this case, upon receiving an instruction to start the startup test that is given by a user operation, the control unit 10 of the server 1 executes the startup test. The startup test is performed in order for the user to confirm that each node normally starts up, after the test mode.

In the startup test, the control unit 10 executes startup priority acquisition processing for acquiring the startup priority indicating the order of starting up the nodes, node startup processing for sequentially starting up the nodes following the acquired startup priority, and startup time display processing for displaying, for each node, the period from when startup was instructed until when startup completion is reported, as the startup time.

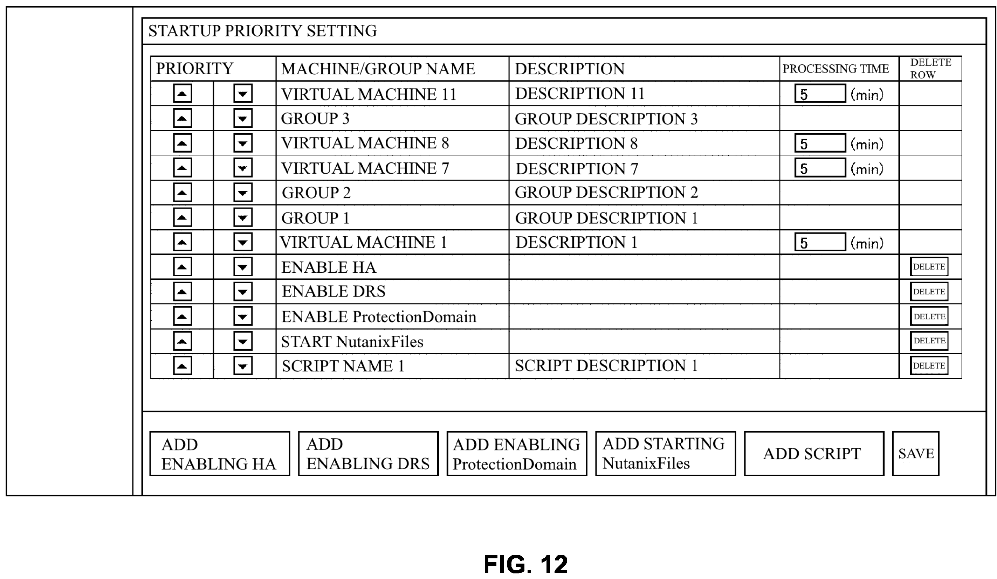

FIG. 12 is a diagram illustrating a screen for setting the startup priority according to the present embodiment. As shown in FIG. 12, in the setting screen of the startup priority, the user can change the priority of starting up the nodes by operating up and down buttons.

When the startup priority of the nodes is changed, the user makes an instruction to display a startup priority setting screen by operating the server 1. The control unit 10 of the server 1, upon receiving an instruction to display the startup priority setting screen, displays the startup priority setting screen in the display of the server 1. Also, when the startup priority is changed on the setting screen by the user operation, the control unit 10 stores the changed startup priority in a storage unit (not illustrated). Also, the control unit 10, upon receiving an instruction to start up the information processing system 100, reads out the startup priority from the storage unit, and starts up the nodes following the startup priority.

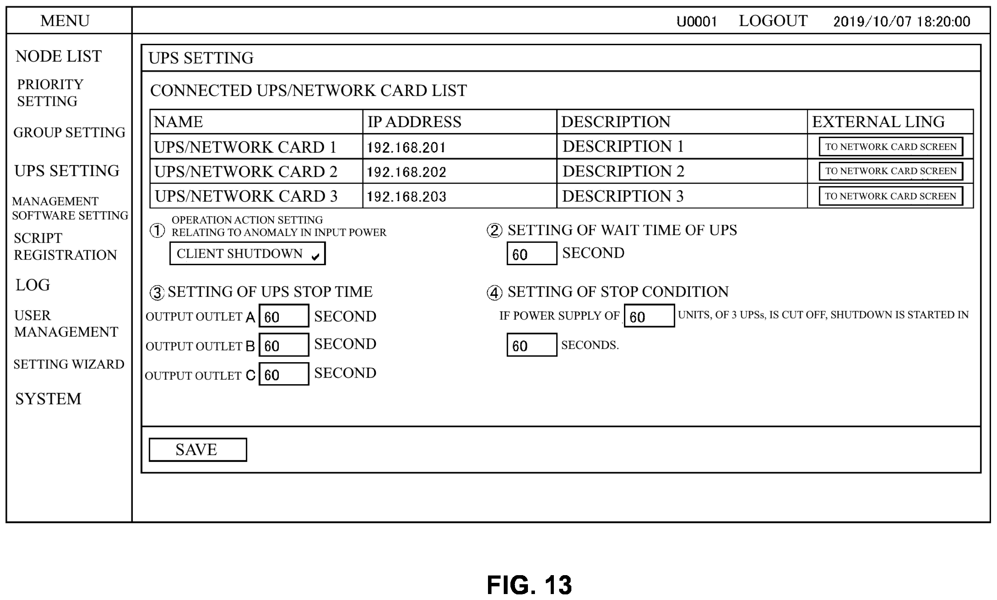

FIG. 13 is a diagram illustrating a setting screen regarding the UPS 2 according to the present embodiment. As shown in FIG. 13, in the setting screen of the UPS 2, an operation action regarding an anomaly in an input power supply, a wait time, a stop time, and a stop condition can be set.

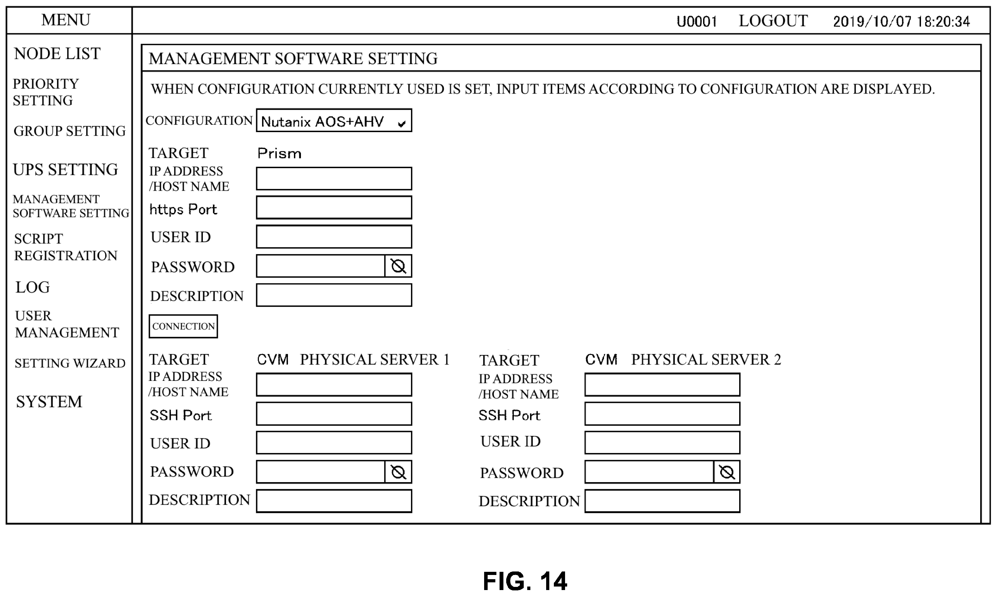

FIG. 14 is a diagram illustrating a setting screen regarding the management software 13 according to the present embodiment. As shown in FIG. 14, in the setting screen regarding the management software 13, Prism, which is one program of the management software 13, the IP address/host name of a server 1 to which the Prism is to be connected, the user ID, the password, and the like can be set.

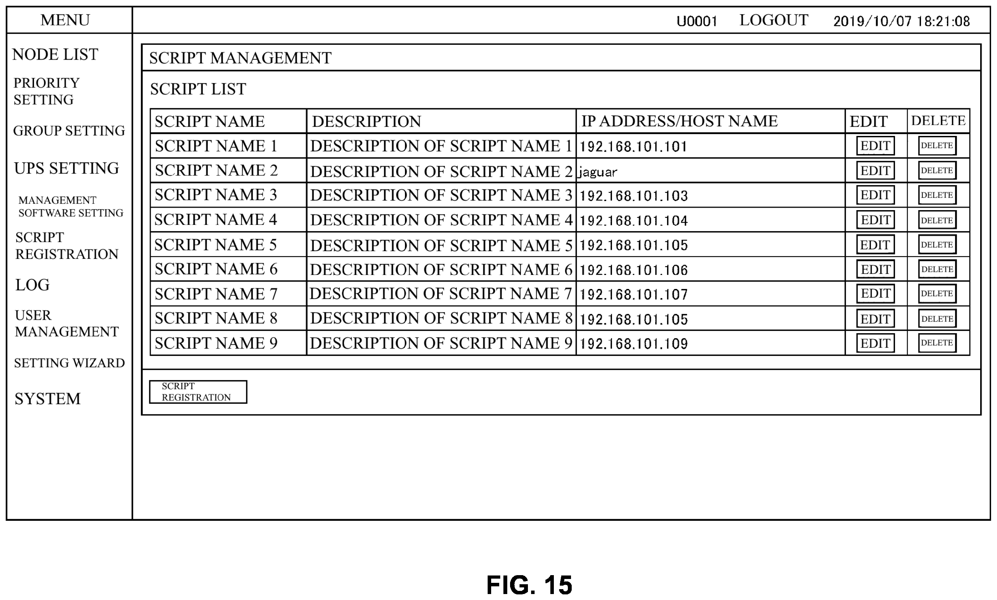

FIG. 15 is a diagram illustrating a script management screen according to the present embodiment. As shown in FIG. 15, in the script management screen, the IP addresses/host names of scripts to be executed in the network card 3 can be managed.

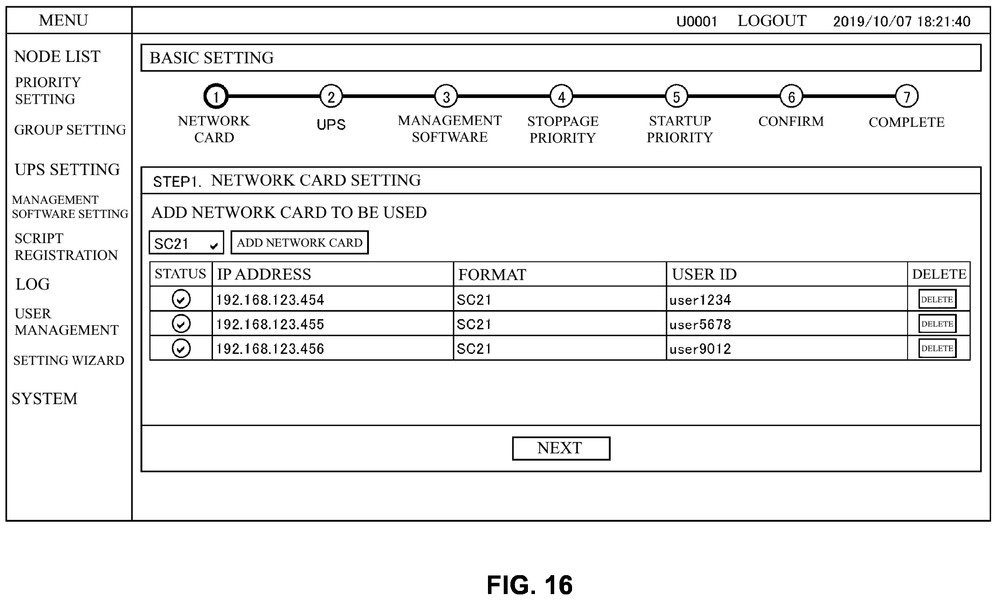

FIG. 16 is a diagram illustrating a basic setting screen according to the present embodiment. As shown in FIG. 16, in the basic setting screen, settings of the network cards 3, the UPSs 2, the management software 13, the stoppage priority and the startup priority of the nodes can be sequentially performed, and the settings can be confirmed.

### Exemplary implementation by software

The control blocks of the server 1 (specifically, the control unit 10) may be realized by logic circuits (hardware) formed in an integrated circuit (IC chip) or the like, or may be realized by software.

In the latter case, the server 1 include a computer that executes commands in programs, which are software for implementing the functions. This computer includes at least one processor, and a computer-readable recording medium in which the programs are stored, for example. Also, the object of the present invention is achieved by the processor reading out the programs from the recording medium and executing the programs, in the computer. A CPU (central processing unit) can be used as the processor, for example. A "non-transitory physical medium" such as a ROM (read only memory), tape, a disk, a card, a semiconductor memory, a programmable logic circuit, or the like can be used as the recording medium. Also, a RAM (random access memory) in which the programs are to be deployed may further be included. Also, the programs may also be supplied to the computer through any transmission medium capable of transmitting the programs (a communication network, broadcast waves, or the like). An aspect of the present invention can be realized as data signals embedded in carrier waves so as to realize the electronic transmission of the programs.

The present invention is not intended to be limited to the embodiments described above, and various changes can be made within the scope defined by the claims. Embodiments achieved by appropriately combining the technical means disclosed in different embodiments also fall within the technical scope of the present invention.

### Further Aspects

Some further aspects of the present disclosure, that should not be confused with the appended claims, are as follows:
Aspect 1: An information processing device (1) that includes a control unit (10),
   wherein the control unit (10) includes:
   a first management unit (122) configured to manage shutdown of a plurality of guest OSs (14) that operate on a virtual OS (11); and
   a second management unit (121) configured to shut down the information processing device (1) when all of the plurality of guest OSs (14) have been shut down by the first management unit (122), and
   wherein the first management unit (122), upon acquiring information indicating that shutdown of one of the plurality of guest OSs (14) is completed, executes shutdown of a guest OS (14) other than the one guest OS (14).
Aspect 2: The information processing device (1) according to Aspect 1,
   wherein the control unit (10) includes a third management unit (13) that monitors the statuses of the plurality of guest OSs (14) and controls the plurality of guest OSs (14), and
   the first management unit (122):
      acquires status information of each of the plurality of guest OSs (14) via the third management unit (13), and
      executes shutdown of the plurality of guest OSs (14) via the third management unit (13).
Aspect 3: The information processing device (1) according to Aspect 1 or 2,
   wherein the second management unit (121), when all of the plurality of guest OSs (14) are shut down by the first management unit (122), shuts down the information processing device (1) via a control device (3) that controls the information processing device (1) and an uninterruptible power supply device (2) connected to the information processing device (1).
Aspect 4: The information processing device (1) according to Aspect 3, having a test mode in which the plurality of guest OSs (14) are shut down following a predetermined order.
Aspect 5: The information processing device (1) according to Aspect 4, further comprising a display control unit (10) configured to generate screen data for displaying a shutdown time of each guest OS (14) in the test mode.
Aspect 6: The information processing device (1) according to Aspect 5,
   wherein the screen data further includes:
   an accumulated time of the shutdown time of each guest OS (14);
   an indication whether or not each guest OS (14) has been successfully shut down; and
   a time limit of the accumulated time.
Aspect 7: A management program to be executed on a virtual OS (11) to be executed on at least one information processing device (1), the management program causing the at least one information processing device (1) to carry out the steps of:
   a first management step of managing shutdown of a plurality of guest OSs (14) that operate on the virtual OS (11); and
   a second management step of shutting down the at least one information processing device (1) when all of the plurality of guest OSs (14) have been shut down by the first management step,
   wherein, in the first management step, when information indicating that shutdown of one of the plurality of guest OSs (14) is completed is acquired, shutdown of a guest OS (14) other than the one guest OS (14) is executed.
Aspect 8: A management method to be executed on at least one information processing device (1), the management method causes the at least one information processing device (1) to carry out the steps of:
   a first management step of managing shutdown of a plurality of guest OSs (14) that operate on the virtual OS (11); and
   a second management step of shutting down the at least one information processing device (1) when all of the plurality of guest OSs (14) have been shut down by the first management step,
   wherein, in the first management step, when information indicating that shutdown of one of the plurality of guest OSs (14) is completed is acquired, shutdown of a guest OS (14) other than the one guest OS (14) is executed.
Aspect 9: An information processing system that includes:
   an information processing device (1) according to any of Aspects 1 to 6,
   an uninterruptible power supply device (2), and
   a control device (3).
Aspect 10: An information processing system that includes a plurality of information processing devices (1) including a control unit (10),
   wherein at least one the information processing device (1) is an information processing device (1) according to any of Aspects 1 to 6.
Aspect 11. An information processing device (1a, 1b, 1c) comprising:
   a hypervisor (11), a virtual software (12) and a plurality of virtual machines (14) as software to be executed by a control unit (10a, 10b, 10c) of the information processing device (1a, 1b, 1c),
   wherein the virtual software (12) is configured to execute shutdown of the plurality of virtual machines (14) and to transmit a notification to a control device (3a, 3b) upon executing shutdown of all the virtual machines (14).
Aspect 12. An information processing system (100) that includes:
   an information processing device (1a, 1b, 1c) according to Aspect 1,
   an uninterruptible power supply device (2a, 2b) connected to the information processing device (1a, 1b, 1c), and
   a control device (3a, 3b) configured to control the information processing device (1a, 1b, 1c) and the uninterruptible power supply device (2a, 2b),
   the control device (3a, 3b) being configured to shut down the information processing device (1a, 1b, 1c) and to stop power supply from the uninterruptible power supply device (2a, 2b) to the information processing device (1a, 1b, 1c) upon receiving the notification from the virtual software (12).
Aspect 13. The information processing system (100) according to Aspect 12,
   wherein the control device (3a, 3b) is configured to decouple a virtual storage constituted by a plurality of physical storage devices incorporated in, connected to, or shared by the information processing device (1a, 1b, 1c) before stopping power supply from the uninterruptible power supply device (2a, 2b) to the information processing device (1a, 1b, 1c) upon receiving the notification.
Aspect 14. The information processing system (100) according to Aspect 13,
   wherein the control device (3) is configured to shut down the hypervisor (11) before stopping power supply from the uninterruptible power supply device (2a, 2b) to the information processing device (1a, 1b, 1c) after decoupling the virtual storage upon receiving the notification.
Aspect 15. The information processing system (100) according to any of Aspects 12 to 14,
   wherein the control device (3) is configured to execute shutdown of the virtual software (12) or the virtual software (12) is configured to execute shutdown of itself before stopping power supply from the uninterruptible power supply device (2a, 2b) to the information processing device (1a, 1b, 1c) upon receiving the notification.
Aspect 16. The information processing system (100) according to any of Aspects 12 to 15,
   wherein the information processing device (1a, 1b, 1c) further comprises a management software (13) as software to be executed by the control unit (10a, 10b, 10c),
   the virtual software (12) is configured to execute shutdown of the plurality of virtual machines (14) via the management software (13) and to transmit the notification to the control device (3a, 3b) upon executing shutdown of all the virtual machines (14).
Aspect 17. The information processing system (100) according to Aspect 16,
   wherein the control device (3) is configured to shut down the management software (13) before stopping power supply from the uninterruptible power supply device (2a, 2b) to the information processing device (1a, 1b, 1c) upon receiving the notification.
Aspect 18. A control device (3) comprising:
   a control unit (31);
   a network communication unit (33) configured to communicate with an information processing device (1a, 1b, 1c); and
   a UPS communication unit (32) configured to communicate with an uninterruptible power supply device (2a, 2b),
   the control unit (31) being configured to shut down the information processing device (1a, 1b, 1c) via the network communication unit (33) and to stop power supply from the uninterruptible power supply device (2a, 2b) to the information processing device (1a, 1b, 1c) via the UPS communication unit (32) upon receiving a notification, from the information processing device (1a, 1b, 1c) via the network communication unit (33), saying that all virtual machines (14) executed by a control unit (10a, 10b, 10c) of the information processing device (1a, 1b, 1c) have stopped operation.
Aspect 19. The control device (3) according to Aspect 18,
   wherein the control unit (31) is configured to decoupling a virtual storage constituted by a plurality of physical storage devices incorporated in, connected to, or shared by the information processing device (1a, 1b, 1c) before stopping power supply from the uninterruptible power supply device (2a, 2b) to the information processing device (1a, 1b, 1c) upon receiving the notification.
Aspect 20. The control device (3) according to Aspect 8 or 9,
   wherein the control unit (31) is configured to shut down the hypervisor (11) before stopping power supply from the uninterruptible power supply device (2a, 2b) to the information processing device (1a, 1b, 1c) after decoupling the virtual storage upon receiving the notification.
Aspect 21. A management method to be executed on at least one information processing device (1a) with a hypervisor (11) and a plurality of virtual machines (14),
   the management method causing the at least one information processing device (1a) to carry out:
   a step of executing shutdown of a plurality of virtual machines (14) that operate on the hypervisor (11);
   a step of transmitting a notification to a control device (3a, 3b) upon shutdown of all the virtual machines (14);
   a step of shutting down, with the control device (3a, 3b), the information processing device (1a, 1b, 1c) upon receiving the notification from the virtual software (12); and
   a step of stopping, with the control device (3a, 3b), power supply from the uninterruptible power supply device (2a, 2b) to the information processing device (1a, 1b, 1c) upon receiving the notification from the virtual software (12)
Aspect 22. A computer program comprising instructions to cause the system of any of Aspects 22 to 27 execute the steps of the method of Aspect 21.

### INDEX TO THE REFERENCE NUMERALS

1, 1a, 1b, 1c Server (information processing device)
2, 2a, 2b UPS (uninterruptible power supply device)
10, 10a Control unit
3, 3a, 3b Network card (control device)
11 Hypervisor (virtual OS)
12 Virtual software
13 Management software (third management unit)
14 Virtual machine (guest OS)
121 Network card service unit (second management unit)
122 Basic service unit (first management unit)
125 Controller unit (display control unit)

## Claims

1. An information processing device (1a) that includes:
a control unit (10a) configured to manage shutdown of a plurality of virtual machines (14) that operate on a hypervisor (11),
the information processing device (1a) being connected to one or more uninterruptible power supply devices (2); and
**characterized in that**:
the control unit (10a) is configured to execute a test mode, in which a shutdown time of all of the virtual machines (14) included in the plurality of virtual machines (14) is estimated.

2. The information processing device (1a) according to claim 1,
wherein in the test mode, the control unit (10a) is configured to estimate the shutdown time of all of the virtual machines (14) by executing the shutdown of all of the virtual machines (14).

3. The information processing device (1a) according to claim 1 or 2,
wherein the control unit (10a) is configured to execute, in the test mode, a stoppage priority acquisition processing for acquiring a stoppage priority indicating an order of shutting down the plurality of virtual machines (14), and
the control unit (10a) is configured to execute node stop processing for sequentially stopping the plurality of virtual machines (14) following the acquired stoppage priority.

4. The information processing device (1a) according to any of claims 1 to 3,
further comprising a display control unit (125) configured to generate screen data for displaying the shutdown time of each virtual machine (14) on a screen when the test mode is executed.

5. The information processing device (1a) according to claim 4,
wherein the display control unit (125) is configured to generate screen data in which the estimated shutdown time of all of the virtual machines (14) is updated after the test mode is executed.

6. The information processing device (1a) according to claim 4 or 5,
wherein the display control unit (125) is configured to generate screen data to receive a user operation on the screen when the test mode is executed, and
the test mode is executed upon receiving an instruction to start the test mode that is given by the user operation.

7. The information processing device (1a) according to any of claims 4 to 6,
wherein the screen data further includes an indication whether or not each virtual machine (14) has been successfully shut down.

8. The information processing device (1a) according to any of claims 4 to 7,
wherein the screen data further includes an accumulated time of the estimated shutdown time of each virtual machine (14).

9. The information processing device (1a) according to claim 8,
wherein the screen data further includes a time limit of the accumulated time.

10. The information processing device (1a) according to any of claims 1 to 9,
wherein the control unit (10a) is configured to execute a startup test mode in which a startup test of the plurality of virtual machines (14) is performed upon receiving an instruction given by a user operation after the test mode.

11. A management method to be executed on at least one information processing device (1a),
wherein the management method causes the at least one information processing device (1a) to carry out:
a management step of managing shutdown of a plurality of virtual machines (14) that operate on a hypervisor (11),
the information processing device (1a) being connected to one or more uninterruptible power supply devices (2); and
wherein the management step comprises a sub-step of:
executing a test for estimating a shutdown time of all of the virtual machines (14) included in the plurality of virtual machines (14).

12. The management method according to claim 11,
wherein the sub-step of executing the test comprises:
executing a stoppage priority acquisition processing for acquiring a stoppage priority indicating an order of shutting down the plurality of virtual machines (14); and
executing node stop processing for sequentially stopping the plurality of virtual machines (14) following the acquired stoppage priority.

13. A management program to be executed on a hypervisor (11) to be executed on at least one information processing device (1a),
the management program causing the at least one information processing device (1a) to carry out:
a management step of managing shutdown of a plurality of virtual machines (14) that operate on the hypervisor (11),
the information processing device (1a) being connected to one or more uninterruptible power supply devices (2); and
wherein the management step comprises a sub-step of:
executing a test for estimating a shutdown time of all of the virtual machines (14) included in the plurality of virtual machines (14).

14. The management program according to claim 13,
wherein the sub-step of executing the test comprises:
executing a stoppage priority acquisition processing for acquiring a stoppage priority indicating an order of shutting down the plurality of virtual machines (14); and
executing node stop processing for sequentially stopping the plurality of virtual machines (14) following the acquired stoppage priority.
